# EUROPÄISCHE PATENTSCHRIFT

(11) **EP 3 394 695 B1**
(45) Veröffentlichungstag und Bekanntmachung des Hinweises auf die Patenterteilung: **21.12.2022**
(21) Anmeldenummer: 16831617.2
(22) Anmeldetag: 20.12.2016
(51) Int. Cl.: G05D 23/13, B60K 1/00, B60K 11/02, B60K 11/04, F01P 7/00, F16K 37/00, F16K 11/074, F16K 31/04, F01P 5/12, F01P 7/14, B60L 58/24

(54) **AKTUATOREINHEIT SOWIE BAUGRUPPENEINHEIT MIT ZUMINDEST EINER SOLCHEN AKTUATOREINHEIT UND ZUMINDEST EINER MASSENSTROMREGEL- ODER VENTILEINHEIT**
ACTUATOR UNIT, AND ASSEMBLY UNIT WITH AT LEAST ONE SUCH ACTUATOR UNIT AND AT LEAST ONE MASS FLOW CONTROL OR VALVE UNIT
UNITÉ D'ACTIONNEMENT AINSI QU'UNITÉ MODULAIRE MUNIE D'AU MOINS UNE TELLE UNITÉ D'ACTIONNEMENT ET D'AU MOINS UNE UNITÉ DE RÉGULATION DU DÉBIT MASSIQUE OU DE VENTILATION

(30) Priorität: 23.12.2015 DE 102015016786
(43) Veröffentlichungstag der Anmeldung: 31.10.2018
(73) Patentinhaber: Voss Automotive GmbH, 51688 Wipperfürth (DE)
(72) Erfinder: RAJAN, Philippose, 50999 Köln (DE); KOHLGRÜBER, Markus, 51789 Lindlar (DE); ZENSES, Frank, 50354 Hürth (DE); SCHWARZKOPF, Otfried, 51515 Kürten (DE)
(74) Vertreter: Rebbereh, Cornelia
(86) Internationale Anmeldenummer: PCT/EP2016/002138
(87) Internationale Veröffentlichungsnummer: WO 2017/108175

(56) Entgegenhaltungen:
- US-A1- 2003 234 039
- US-A1- 2005 006 489
- US-A1- 2015 045 971
- US-B1- 6 360 772

## Beschreibung

Die Erfindung betrifft eine Aktuatoreinheit, umfassend zumindest einen einen Aktuator aufnehmenden Gehäuseteil, wobei der Aktuator zumindest einen Antriebsmotor und zumindest ein Getriebe umfasst und die Aktuatoreinheit an zumindest einer Seite des Gehäuseteils mit zumindest einer von der Aktuatoreinheit anzutreibenden Einheit, insbesondere einer Massenstromregeloder Ventileinheit, verbindbar oder verbunden ist. Die Erfindung betrifft ferner eine Baugruppeneinheit mit zumindest einer solchen Aktuatoreinheit und zumindest einer Massenstromregel- oder Ventileinheit.

Aktuatoreinheiten zum Antreiben von Ventileinheiten oder Massenstromregeleinheiten zum Regeln von Massenströmen sind im Stand der Technik bekannt. Gerade in einem Kühlmittelsystem für Fahrzeuge mit Hybridoder reinem Elektroantrieb ist die Verwendung verschiedener Sensoren und Ventile zum Regeln bzw. Steuern eines Massenstroms eines Kühlmittels zu den einzelnen zu temperierenden Komponenten bekannt. Die verschiedenen Sensoren und Ventile sind hierbei an unterschiedlichen Stellen im Kühlmittelsystem angeordnet, um den Massenstrom im Kühlmittelsystem zum Kühlen einer Batterie sowie weiterer Komponenten zu regeln. Zum Verstellen der Ventile sind Aktuatoreinheiten vorgesehen, die insbesondere über einen motorischen Stellantrieb die jeweilige gewünschte Ventilstellung einstellen.

Die US 2005/0006489 A1 offenbart ein Gasventil zum Steuern eines Gasstroms zu einem Brenner. Ein Aktuator steuert die Gasströmung durch das Ventil. Ein Schrittmotor betreibt den Aktuator. Ein erster Temperatursensor misst die Gastemperatur, des in das Ventil eintretenden Gases. Ein zweiter Temperatursensor misst die Gastemperatur des Gases, das aus dem Ventil austritt. Eine Steuerung steuert den Schrittmotor in Reaktion auf die gemessenen Temperaturen. Der erste Temperatursensor, der die Gaseinlasstemperatur misst, ist in einem Einlassblock angeordnet. Der Temperatursensor zum Messen der Gasausgangstemperatur ist in einem Auslassblock angeordnet. Der Einlassblock und der Auslassblock sind Teile des Ventilkörpers, der ferner eine obere Platte, eine Bodenplatte, zwei Seitenplatten, eine Einlassplatte, an der der Einlassblock sich erstreckt, und eine Auslassplatte umfasst, an der sich der Auslassblock erstreckt.

Die US 6,360,772 B1 offenbart eine Massenstromsteuerung zum Steuern eines Fluidstroms in einer Leitung. Diese umfasst einen Strömungsbefehleinlass zum Aussenden eines Strömungssteuerungsbefehls, eine Steuerungseinheit, die den Strömungssteuerungsbefehl annimmt zum Erzeugen eines Steuerungssignals, eine Strömungsmesseinrichtung mit einer Anzahl von Temperatursensoren, einen Sensorschaltkreis, einen Verstärker, einen Aktuator, der durch die Steuerungseinheit angetrieben wird, ein Ventilelement, enthaltend ein Ventil, das durch den Aktuator eingestellt wird zum Steuern des Fluidstroms in der Leitung, eine Distorsionssteuerung, die in Reaktion auf das Steuerungssignal einen elastischen Körper deformiert, und den elastischen Körper, der deformiert wird in Reaktion auf eine äußere Kraft, die sich aus der Distorsion der Distorsionssteuerung ergibt, zum Ändern der Öffnungsgröße der Leitung.

Die US 2003/0234039 A1 offenbart eine Massenstromsteuerung, enthaltend einen thermischen Massenstromsensor, der relativ unempfindlich gegenüber Schwankungen des Eingangsdrucks ist. Ein Drucksensor und ein Temperatursensor stellen ihre Signale einer elektronischen Steuerung zur Verfügung, wobei die elektronische Steuerung die gemessene Eingangsströmungsrate und den Druck innerhalb eines Totvolumens anzeigt. Die elektronische Steuerung verwendet den gemessenen Druck, um die gemessene Einlassströmungsrate auszugleichen und hierbei eine ausgeglichene Messung der Auslassströmungsrate zu erzeugen, die verwendet werden kann, um ein Steuerungsventil der Massenstromsteuerung zu betreiben.

Aus der US 2015/0045971 A1 ist ein Kraftstoffventil zum Regulieren einer Kraftstoffströmung zu einer Verbrennungseinheit bekannt, das ein Kontrollmodul enthält, ausgebildet zum Bestimmen des Kraftstoffverbrauchs, basierend auf einer Messung in Bezug auf die Kraftstoffströmung durch das Kraftstoffventil hindurch. Die Anordnung verschiedener Sensoren und Ventile innerhalb eines solchen Fahrzeuges an unterschiedlichen Stellen im Kühlmittelsystem in dessen Kühlmittel-Leitungen ist häufig sehr komplex. Daher wäre es wünschenswert, hierbei eine Vereinfachung zu schaffen.

Der vorliegenden Erfindung liegt daher die Aufgabe zugrunde, eine Aktuatoreinheit, umfassend zumindest einen einen Aktuator aufnehmenden Gehäuseteil, wobei der Aktuator zumindest einen Antriebsmotor und zumindest ein Getriebe umfasst und die Aktuatoreinheit an zumindest einer Seite des Gehäuseteils mit zumindest einer von der Aktuatoreinheit anzutreibenden Einheit, insbesondere einer Massenstromregel- oder Ventileinheit, verbindbar oder verbunden ist, vorzusehen, die die Möglichkeit schafft, eine Reduzierung der Komplexität des Aufbaus der sensorischen bzw. Signalerfassung insbesondere der Temperatur eines Kühlmittels in einem Kühlmittelkreislauf und der Massenstromregelung in einer Massenstromregel- und Ventileinheit einer Baugruppeneinheit mit Aktuatoreinheit und Massenstromregel- und Ventileinheit zu erzielen.

Die Aufgabe wird für eine Aktuatoreinheit nach dem Oberbegriff des Anspruchs 1 dadurch gelöst, dass die zumindest eine Signalerfassungseinrichtung zum Erfassen der Temperatur an der zumindest einen Seite des Gehäuseteils, an der die Aktuatoreinheit mit der zumindest einen anzutreibenden Einheit verbunden ist, vorgesehen ist, wobei ein gemeinsamer Anschlussdeckelteil von Aktuatoreinheit und der durch diese anzutreibenden Einheit vorgesehen und die zumindest eine Signalerfassungseinrichtung in dem gemeinsamen Anschlussdeckelteil von Aktuatoreinheit und der durch diese anzutreibenden Einheit angeordnet ist. Für eine Baugruppeneinheit mit zumindest einer solchen Aktuatoreinheit und zumindest einer Massenstromregel- oder Ventileinheit wird die Aufgabe dadurch gelöst, dass die Signalerfassungseinrichtung in einem Verbindungsbereich von Aktuatoreinheit und Massenstromregel- oder Ventileinheit angeordnet ist zum Erfassen der Temperatur zumindest eines die Massenstromregel- oder Ventileinheit durchströmenden oder durchströmbaren Massenstroms. Weiterbildungen der Erfindung sind in den abhängigen Ansprüchen definiert.

Dadurch wird eine Aktuatoreinheit geschaffen, die zumindest einen Gehäuseteil und zumindest einen diesen verschließenden Gehäusedeckelteil umfasst, wobei der Aktuator, insbesondere bestehend aus einem Antriebsmotor und einem Getriebe, im Innern des Gehäuseteils angeordnet ist. Über das Getriebe kann eine anzutreibende Einheit, wie die Massenstromregel- bzw. Ventileinheit, angetrieben werden. Hierzu kann diese an einer Seite mit dem Gehäuseteil der Aktuatoreinheit verbunden werden, insbesondere im Bereich eines Gehäusedeckelteils der Aktuatoreinheit. Um die Temperatur im Innern des Gehäuseteils der Massenstromregel- bzw. Ventileinheit zu erfassen, wird die zumindest eine Signalerfassungseinrichtung zum Erfassen einer Temperatur vorgesehen. Die Signalerfassungseinrichtung bzw. Temperatursensoreinrichtung wird an der Verbindungsseite der Aktuatoreinheit mit der Massenstromregel- oder Ventileinheit angeordnet, um eine Temperaturmessung nach dem Zusammenfügen von Aktuatoreinheit und Massenstromregel- bzw. Ventileinheit in letzterer vornehmen zu können. Hierfür ragt die Signalerfassungseinrichtung oder ein diese aufnehmender Teil der Aktuatoreinheit nach dem Zusammenfügen der Aktuatoreinheit und der Massenstromregel- bzw. Ventileinheit insbesondere in das Innere der Massenstromregel- bzw. Ventileinheit hinein.

Das Innere des Gehäuseteils der Massenstromregel- bzw. Ventileinheit wird von einem Medium, wie einem Kühlmittel bzw. Kühlwasser durchströmt. Durch die Möglichkeit, über die zumindest eine Signalerfassungseinrichtung die Temperatur in dem Innern der Massenstromregel- oder Ventileinheit zu erfassen, kann über eine entsprechende Auswerteeinheit und/oder Regeleinheit, an die das von der Signalerfassungseinrichtung erfasste Temperatursignal weitergeleitet wird, eine Beeinflussung des Aktuators der Aktuatoreinheit und somit der Ventilstellung der Massenstromregel- oder Ventileinheit und dadurch zumindest eines aus dieser austretenden Massenstroms, wie beispielsweise eines Kühlmittelmassenstroms, bewirkt werden. Der Massenstrom kann ein Haupt- oder Gesamtmassenstrom ṁ_{ges} mit einer Temperatur t_{ges} oder zumindest ein Teilmassenstrom mit einer Temperatur tₜₑᵢₗ sein. Die Massenstromregel- oder Ventileinheit kann zum Mischen von Teilmassenströmen zu einem Haupt- oder Gesamtmassenstrom oder zum Aufteilen/Splitten eines Haupt- oder Gesamtmassenstroms in Teilmassenströme dienen.

Die Signalerfassungseinrichtung ist in den Gehäusedeckelteil der Aktuatoreinheit integriert. Sie kann durch eine Öffnung in diesem aus diesem nach außen herausragen, so dass nach Verbinden der Aktuatoreinheit mit der durch diesen anzutreibenden Einheit bzw. Massenstromregel- oder Ventileinheit die Signalerfassungseinrichtung in das Innere von dieser, somit in den Strömungsweg des Kühlmittels innerhalb von deren Gehäuseteil, hineinragen kann. Der Gehäuseteil der Massenstromregel- oder Ventileinheit weist innere Hohlräume oder Kavitäten auf, die von dem Kühlmittel durchströmt werden (können). Insbesondere das Erfassen der Temperatur des Kühlmittels kann somit über Vorsehen der Signalerfassungseinrichtung in direktem Kontakt mit diesem oder über den Kontakt der Signalerfassungseinrichtung mit dem Material des Gehäuseteils der Aktuatoreinheit erfolgen, der mit der Massenstromregel- oder Ventileinheit verbunden wird oder ist. Das Material, in dem die Signalerfassungseinrichtung angeordnet wird oder ist, ist vorteilhaft zumindest im Bereich der Aufnahme der zumindest einen Signalerfassungseinrichtung zum Erfassen einer Temperatur wärmeleitfähig ausgebildet. Hierdurch ist ein Erfassen der Temperatur des Kühlmittels ohne direkten Kontakt der Signalerfassungseinrichtung mit diesem möglich. Eine solche Anordnung einer Signalerfassungseinrichtung ohne direkten Kontakt mit dem Kühlmittel erweist sich im Hinblick auf das Sicherstellen der vollständigen Dichtigkeit der Anordnungsstelle der Signalerfassungseinrichtung als vorteilhaft, da bei Anordnen der Signalerfassungseinrichtung in einer entsprechenden Aufnahme in dem Gehäusedeckelteil der Aktuatoreinheit hier keine weitere Abdichtung zum Vermeiden eines Eindringens von Kühlmittel in das Innere des Gehäuseteils der Aktuatoreinheit erforderlich ist.

Die Massenstromregel- oder Ventileinheit dient zum Einstellen der Größe eines oder mehrerer Massenströme und insbesondere von dessen oder deren Temperatur durch entsprechendes Mischen von Teilmassenströmen. Hierfür erweist es sich als sehr vorteilhaft, dass durch das Anordnen der Signalerfassungseinrichtung an der zumindest einen Seite des Gehäuseteils der Aktuatoreinheit, an der die Aktuatoreinheit mit der zumindest einen Massenstromregel- oder Ventileinheit verbindbar oder verbunden ist, eine räumliche Nähe der Messkomponente, die die Temperatur misst, des Aktuators, der eine Ansteuerung der Ventilkomponente, basierend auf dem Messwert vornimmt, und der Ventilkomponente selbst, die von dem Aktuator angesteuert wird, vorgesehen ist. Bei den bekannten Anordnungen wird demgegenüber ein Temperatursensor über zahlreiche Schnittstellen bzw. Unterbrechungsstellen in eine Leitung integriert und eine aufwendige Elektroverkabelung zum Anschließen von Temperatursensor und insbesondere Schaltventilen vorgesehen.

Die Massenstromregel- oder Ventileinheit dient einerseits zum Aufteilen eines Gesamtmassenstroms in Teilmassenströme und andererseits zum Zusammenführen von Teilmassenströmen zu einem Gesamtmassenstrom. Hierbei kann die Temperatur über die Signalerfassungseinrichtung sowohl am Gesamtmassenstrom, wie einem bezüglich seiner Temperatur und Größe einzustellenden Vorlaufmassenstrom als auch an zumindest einem Teilmassenstrom als Teilstrom eines zu temperierenden Haupt- oder Gesamtmassenstroms erfolgen.

Vorteilhaft kann die Baugruppeneinheit aus zumindest einer solchen Aktuatoreinheit und zumindest einer Massenstromregel- oder Ventileinheit im Kühlmittel- bzw. Kühlwasserkreislauf eines Elektro- oder Hybridfahrzeugs genutzt werden, insbesondere im Niedertemperaturkreislauf oder ggf. auch im Hochtemperaturkreislauf eines solchen Fahrzeugs. Über die Massenstromregeloder Ventileinheit kann dabei eine Messung und Einstellung eines Hauptmassenstroms bzw. Vorlaufmassenstroms, der den Komponenten des Elektro- oder Hybridfahrzeugs zugeleitet wird, vorgesehen werden. Ferner ist eine Messung zumindest eines Teilmassenstroms, also eines Teilstroms des Hauptmassenstroms bzw. Gesamtmassenstroms, der die anzutreibende Einheit in Form einer Massenstromregel- oder Ventileinheit durchströmt, möglich.

Weiter vorteilhaft ist die zumindest eine Signalerfassungseinrichtung beabstandet zu dem zumindest einen Antriebsmotor der Aktuatoreinheit angeordnet. Da die Beeinflussung der Temperatur des die von der Aktuatoreinheit anzutreibenden Einheit durchströmenden Mediums durch die Temperaturentwicklung des Antriebsmotors der Aktuatoreinheit beeinflusst wird, erfolgt vorteilhaft die Temperaturerfassung nicht direkt im Bereich des Antriebsmotors, sondern entfernt von diesem Dementsprechend erweist sich insbesondere das Anordnen der Signalerfassungseinrichtung im Gehäusedeckelteil der Aktuatoreinheit als vorteilhaft, wenn der Gehäusedeckelteil der Gehäusedeckelteil ein gemeinsamer Anschlussdeckelteil von Aktuatoreinheit und Massenstromregel- oder Ventileinheit ist. Die zumindest eine Signalerfassungseinrichtung kann dementsprechend im Bereich des gemeinsamen Anschlussdeckelteils, insbesondere in oder an diesem gemeinsamen Anschlussdeckelteil, angeordnet sein bzw. durch diesen hindurchgreifen, um die gewünschte Temperaturerfassung im Innern des Gehäuseteils der insbesondere Massenstromregel- oder Ventileinheit vorzunehmen. Es ist ein gemeinsamer Anschlussdeckelteil vorgesehen, durch den der Gehäuseteil der Aktuatoreinheit und der Gehäuseteil der Massenstromregel- oder Ventileinheit als durch die Aktuatoreinheit anzutreibender Einheit miteinander verbunden werden.

Die zumindest eine Signalerfassungseinrichtung der Aktuatoreinheit kann beispielsweise auf einer Platine der Aktuatoreinheit angeordnet oder mit dieser signalverbunden sein. Die Platine kann insbesondere eine Regeleinheit zum Regeln des Antriebsmotors und hierüber der Ventilstellungen der Massenstromregel- oder Ventileinheit umfassen. Durch das Anordnen oder Signalverbinden der zumindest einen Signalerfassungseinrichtung auf bzw. mit der die Regeleinheit umfassenden Platine der Aktuatoreinheit ist eine einfache Implementierung der Signalerfassungseinrichtung dort möglich, da die Platine des Aktuators ohnehin als Teil der Aktuatoreinheit vorgesehen ist und problemlos die zumindest eine Signalerfassungseinrichtung zum Erfassen der Temperatur darauf angeordnet oder damit signalverbunden werden kann. Die von der Signalerfassungseinrichtung erfasste Temperatur wird der Einstellung der Ventilstellung zugrundegelegt. Durch das Anordnen der Signalerfassungseinrichtung auf der eine Regeleinheit umfassenden Platine der Aktuatoreinheit ist somit vorteilhaft eine kurzwegige Signalverbindung zwischen Regeleinheit und Signalerfassungseinrichtung möglich.

Als weiter vorteilhaft erweist es sich, zumindest eine Regeleinheit zum Regeln insbesondere des Antriebsmotors der Aktuatoreinheit vorzusehen, insbesondere die Regeleinheit an oder in dem Gehäuseteil der Aktuatoreinheit anzuordnen. Beispielsweise kann die Regeleinheit auch auf der Außenseite des Gehäuseteils der Aktuatoreinheit als externe Regeleinheit angeordnet und entsprechend mit der Platine im Innern des Gehäuseteils der Aktuatoreinheit signalverbunden werden.

Wie bereits erwähnt, ist die anzutreibende Einheit insbesondere eine Massenstromregel- oder Ventileinheit sein. Diese kann beispielsweise in Form einer Proportionalventileinheit zum stufenlosen oder zumindest bereichsweise stufenlosen Einstellen zumindest eines Massenstroms beispielsweise in einem Kühlmittelsystem eines Elektro- oder Hybridfahrzeugs sein oder aber eine Schaltventileinheit, bei der das Einstellen eines Massenstroms durch diskrete Schaltstellungen erfolgt. Die Massenstromregel- oder Ventileinheit kann insbesondere als 3/2-Wegeventileinheit mit drei Anschlusseinrichtungen und zwei Schaltstellungen oder als 4/3-Wegeventileinheit mit vier Anschlusseinrichtungen und drei Schaltstellungen ausgebildet werden bzw. sein. Die Wahl der jeweiligen Massenstromregel- oder Ventileinheit kann sich danach richten, wieviele Leitungen, insbesondere Kühlmittelleitungen eines Kühlmittelkreislaufs, an diese angeschlossen und dementsprechend über die Massenstromregel- oder Ventileinheit massenstromgeregelt werden sollen, also insbesondere, welcher Anteil an Massenstrom in welche Kühlmittelleitung eingeleitet werden soll. Die jeweilige Ansteuerung hierfür wird durch die Aktuatoreinheit vorgenommen, geregelt durch die Regeleinheit, die, wie bereits vorstehend erwähnt, entweder auf der Platine der Aktuatoreinheit oder extern, beispielsweise auf der Außenseite des Gehäuseteils der Aktuatoreinheit angeordnet sein kann.

Zur näheren Erläuterung der Erfindung werden im Folgenden Ausführungsbeispiele von dieser näher anhand der Zeichnungen beschrieben. Diese zeigen in:
- Figur 1: eine skizzenhafte Seitenansicht einer ersten Ausführungsform einer erfindungsgemäßen Aktuatoreinheit mit angeflanschter Massenstromregel- oder Ventileinheit mit drei Anschlusseinrichtungen, wobei eine Signalerfassungseinrichtung in einem gemeinsamen Anschlussdeckelteil angeordnet ist,
- Figur 2: eine skizzenhafte Seitenansicht einer Aktuatoreinheit des Standes der Technik mit eigenem Gehäusedeckelteil, an dem über einen Abschlussdeckel eine einen eigenen Deckelteil aufweisende Massenstromregel- oder Ventileinheit mit drei Anschlusseinrichtungen befestigt ist,
- Figur 3: eine Längsschnittansicht einer zweiten Ausführungsform einer erfindungsgemäßen Aktuatoreinheit mit angeflanschter Massenstromregel- oder Ventileinheit,
- Figur 4: eine Unteransicht der Aktuatoreinheit gemäß Figur 2,
- Figur 5: eine Prinzipskizze eines als Elektrofahrzeug oder Hybridfahrzeug ausgebildeten Fahrzeugs mit einem Kühlmittelkreislauf zum Temperieren einer Traktionsbatterie als Energiespeicher, umfassend eine erfindungsgemäße Baugruppeneinheit aus erfindungsgemäßer Aktuatoreinheit, mit Signalerfassungseinrichtung, und Massenstromregel- und Ventileinheit in Ausbildung als 3/2-Wegeventileinheit,
- Figur 6: eine Prinzipskizze eines Fahrzeugs mit Elektromotor und einem ersten Kühlmittelkreislauf zum Konditionieren des Fahrzeuginnenraums und zum Kühlen des Elektromotors, umfassend eine erfindungsgemäße Baugruppeneinheit aus erfindungsgemäßer Aktuatoreinheit, mit Signalerfassungseinrichtung, und Massenstromregel- und Ventileinheit in Ausbildung als 3/2-Wegeventileinheit, und
- Figur 7: eine Prinzipskizze eines zweiten Kühlmittelkreislaufs zum Temperieren einer Traktionsbatterie des Fahrzeugs gemäß Figur 6, umfassend eine erfindungsgemäße Baugruppeneinheit aus erfindungsgemäßer Aktuatoreinheit, mit Signalerfassungseinrichtung, und Massenstromregel- und Ventileinheit in Ausbildung als 4/3-Wegeventileinheit.

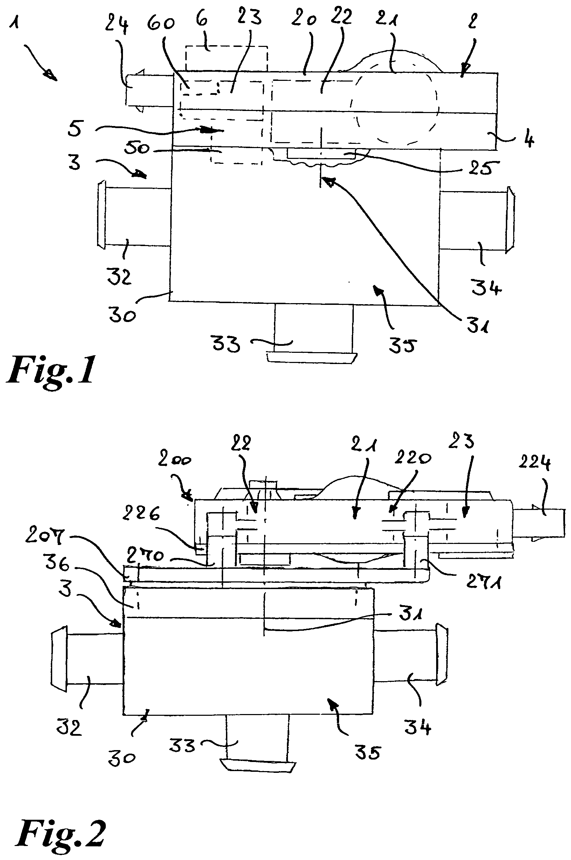

Figur 1 zeigt eine Ausführungsform einer Baugruppeneinheit 1, umfassend eine Aktuatoreinheit 2 und eine Massenstromregel- und Ventileinheit 3. Die Aktuatoreinheit 2 umfasst einen Gehäuseteil 20, in dem ein Antriebsmotor 21, der insbesondere ein Elektromotor ist, ein Getriebe 22, mit einer Nabe 25 zum Angreifen an einer Welle 31 zum Antrieben von dieser, und eine Platine 23 mit elektronischen Komponenten, u.a. einer Regeleinheit 60 zum Regeln des Antriebsmotors 21, angeordnet sind. Ferner kann mit dem Gehäuseteil 20 der Aktuatoreinheit 2 auch eine übergeordnete Regeleinheit 6 verbunden bzw. auf diesem angeordnet sein, wie in Figur 1 angedeutet. Auch diese dient der Regelung des Antriebsmotors 21 und somit der Massenstromregelung im Innern der Massenstromregel- und Ventileinheit 3.

Ferner ist der Gehäuseteil 20 außenseitig mit einem Elektrostecker 24 versehen, über den ein Anschluss an eine Energieversorgungseinrichtung (nicht gezeigt) zum Versorgen der Komponenten auf der Platine 23 und des Antriebsmotors 21 mit Strom bzw. Spannung erfolgen kann. Die Welle 31 ist Teil eines Ventilstellungselements (nicht gezeigt) im Innern 35 eines Gehäuseteils 30 der Massenstromregel- und Ventileinheit 3. Sie ist in Figur 1 lediglich durch eine strichpunktierte Linie angedeutet. Die Welle 31 kann beispielsweise eine Drehachse eines mit Öffnungen zum Durchtritt von Medium versehenen Rotortellers sein, der zu einem mit entsprechenden Öffnungen versehenen feststehenden Blendenelement relativbewegbar ist, wobei je nach Positionierung des drehbaren Rotortellers die Öffnungen von drehbarem Rotorteller und feststehendem Blendenelement einander vollständig, teilweise oder gar nicht überdecken. Hierüber kann der Massenstrom eingestellt werden, der durch diese einander vollständig, teilweise oder gar nicht überdeckenden Öffnungen hindurchströmt bzw. hindurchströmen kann.

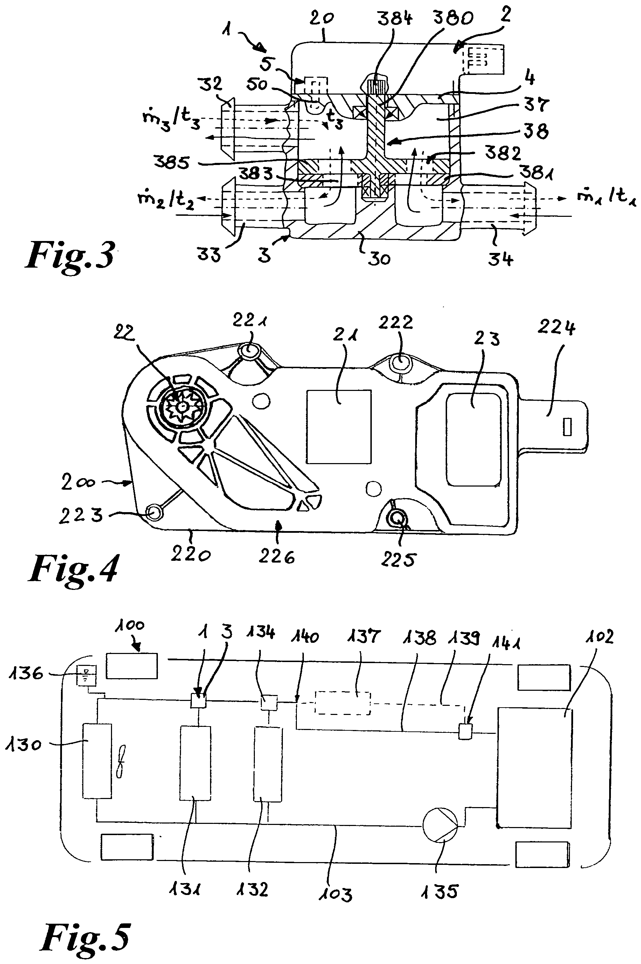

Der Gehäuseteil 30 umfasst drei Anschlusseinrichtungen 32, 33, 34, wobei diese in der in Figur 1 gezeigten Ausführungsvariante jeweils um 90° zueinander versetzt außenseitig an dem Gehäuseteil 30 angeordnet sind. An den drei Anschlusseinrichtungen 32, 33, 34 können Leitungen, wie z.B. Kühlmittelleitungen, angeschlossen werden. Der Gehäuseteil 30 der Massenstromregel- und Ventileinheit 3 und der Gehäuseteil 20 der Aktuatoreinheit 2 sind über einen gemeinsamen Anschlussdeckelteil 4 miteinander verbunden. In dem Anschlussdeckelteil 4 ist eine Signalerfassungseinrichtung 5 mit einem Temperatursensor 50 angeordnet. Der Temperatursensor 50 dient der Erfassung der Temperatur eines Mediums, wie Kühlmittel oder Kühlwasser z.B. eines Elektro- oder Hybridfahrzeugs, im Innern 35 des Gehäuseteils 30 der Massenstromregel- und Ventileinheit 3, um über die Aktuatoreinheit 2 entsprechend auf die Stellung des Ventilstellelements im Innern der Massenstromregel- oder Ventileinheit 3 eingreifen und die Massenströme dort entsprechend einstellen zu können. Dies ist im Detail in Figur 3 zu sehen.

In Figur 3 ist eine Längsschnittansicht einer weiteren Ausführungsvariante der Aktuatoreinheit 2 und Massenstromregel- und Ventileinheit 3 gezeigt, die über den gemeinsamen Anschlussdeckelteil 4 aneinander geflanscht sind. Wiederum ist die Signalerfassungseinrichtung 5 mit dem Temperatursensor 50 in dem gemeinsamen Anschlussdeckelteil 4 angeordnet und ragt in das Innere der Aktuatoreinheit 2 hinein. Im Innern des Gehäuseteils 30 der Massenstromregelund Ventileinheit 3 ist eine innere Kammer 37 gebildet, in die Teilmassenströme ṁ₁ und ṁ₂ einströmen und dort nach Mischen der Teilmassenströme ṁ₁ und ṁ₂ einen Gesamtmassenstrom ṁ₃ bilden. Alternativ kann in die innere Kammer 37 ein Gesamt- oder Hauptmassenstrom ṁ₃ durch die Anschlusseinrichtung 32 einströmen und Teilmassenströme ṁ₁ und ṁ₂ aus den Anschlusseinrichtungen 33, 34 wieder ausströmen. Zum Mischen von Teilmassenströmen zu einem Haupt- bzw. Gesamtmassenstrom und zum Aufteilen eines Haupt- bzw. Gesamtmassenstroms in Teilmassenströme ist im Innern der Massenstromregelund Ventileinheit das Ventilstellelement 38, das ein drehbar gelagertes Rotorelement 380 und ein feststehendes Blendenelement 381 umfasst, vorgesehen. Das Rotorelement 380 weist eine Anzahl von Durchgangsöffnungen 382 in seinen Rotorteller 385 auf. Auch das feststehende Blendenelement 381 weist eine Anzahl von Durchgangsöffnungen 383 auf. Diese können je nach Position des Rotorelements 380 einander vollständig, teilweise oder gar nicht überdecken, so dass hierüber die Teilmassenströme, die durch das Ventilstellelement 38 hindurchtreten können, eingestellt werden. Das Ventilstellelement bzw. dessen Rotorelement 380 ist über die Aktuatoreinheit 2 drehbar, um ein solches Verstellen der Durchgangsöffnungen 382 und 383 zueinander zu ermöglichen. Zu diesem Zweck ist endseitig, in den Gehäuseteil 20 der Aktuatoreinheit 2 hineinragend, ein sogenannter Spline 384 an dem Rotorelement 380 angeordnet, an dem über eine Antriebseinheit, die Teil der Aktuatoreinheit 2 ist, angegriffen und das Rotorelement 380 relativ zu dem feststehenden Blendenelement 381 verdreht wird. Das feststehende Blendenelement 381 ist direkt benachbart zu dem Rotorteller 385 des Rotorelementes 380 im Innern des Gehäuseteils 30 der Massenstromregel- und Ventileinheit 3 befestigt.

Den Vorgang des Mischens der Teilmassenströme ṁ₁ und ṁ₂, die jeweils eine Temperatur t₁ bzw. t₂ aufweisen, ist in Figur 3 durch Pfeile mit durchgezogenen Linien veranschaulicht, während das Aufteilen des Haupt- oder Gesamtmassenstroms ṁ₃ mit einer Temperatur t₃ in die Teilmassenströme ṁ₁ und ṁ₂ mit Temperaturen t₁ und t₂ durch Pfeile mit gestrichelten Linien veranschaulicht ist. Bei einem Mischen der Teilmassenströme zum Gesamtmassenstrom wird über die Abfrage des Temperatursensors 50 die Temperatur t₃ über das Zumischen der Teilmassenströme mit ihren Temperaturen t₁ und t₂ eingestellt, wobei die Temperaturen t₁ und t₂ ebenso wie die Massenströme ṁ₁ und ṁ₂ einstellbar sind, wobei weiter die Teilmassenströme ṁ₁ und ṁ₂ über die Ventilstellung des Ventilstellelementes 38, also die Relativposition des Rotorelementes 380 bzw. von dessen Rotorteller 385 gegenüber dem feststehenden Blendenelement 381 mit den jeweiligen Durchgangsöffnungen 382 bzw. 383 eingestellt werden. Hierbei können grundsätzlich die Temperaturen der Teilmassenströme und des Gesamtmassenstroms alle gleich sein, wobei gilt t₁ = t₂ = t₃. Ebenso können alle Temperaturen unterschiedlich sein, mit t₁ ≠ t₂ ≠ t₃ oder auch beliebige Kombinationen dazwischen, bei denen die Temperaturen der Teilmassenströme teilweise identisch mit der Temperatur des Gesamt- bzw. Hauptmassenstroms sind oder auch die Temperaturen der Teilmassenströme gleich sein können, während diese sich von der Temperatur des Haupt- oder Gesamtmassenstroms unterscheiden.

Der Temperatursensor 50 kann nicht nur in dem gemeinsamen Anschlussdeckelteil 4 zwischen dem Gehäuseteil 20 der Aktuatoreinheit 2 und dem Gehäuseteil 30 der Massenstromregel- und Ventileinheit 3 angeordnet sein. Um die Temperatur von Massenströmen im
Innern 35 des Gehäuseteils 30 der Massenstromregel- oder Ventileinheit 3 zu ermitteln, greift die Signalerfassungseinrichtung 5 bzw. deren Temperatursensor 50 durch beide Gehäusedeckelteile hindurch oder in beide ein. Beide Gehäusedeckelteile können daher entsprechende Aufnahmen, die insbesondere ineinandergreifen bzw. ineinanderliegen, aufweisen und/oder entsprechende Öffnungen, in denen die Signalerfassungseinrichtung 5 bzw. deren Temperatursensor 50 angeordnet wird.

Bei der in Figur 2 gezeigten Verbindung zwischen dem Gehäusedeckelteil 226 der Aktuatoreinheit 200 und dem Gehäusedeckelteil 36 der Massenstromregeloder Ventileinheit 3 sind diese mit Abstand zueinander angeordnet und miteinander durch einen mit Domen 270, 271 versehenen Abschlussdeckel 207 verbunden. Anstelle eines mit dem Gehäuseteil 30 der Massenstromregel- und Ventileinheit 3 etwa fluchtenden Gehäuseteils 20 der Aktuatoreinheit 2, wie sie in Figur 1 gezeigt ist, ist in Figur 2 eine zueinander seitlich versetzte Anordnung der Gehäuseteile 220, 230 von Aktuatoreinheit 200 und Massenstromregel- oder Ventileinheit 3 vorgesehen. Dies ist dadurch bedingt, dass, wie sich insbesondere aus der Unteransicht der Aktuatoreinheit 200 in Figur 4 ergibt, der das Getriebe 22 umfassende Antrieb für die Welle 31 der Massenstromregel- und Ventileinheit 3 in einem seitlichen Bereich des Gehäuseteils 220 der Aktuatoreinheit 200 angeordnet ist, während dieses bei der Ausführungsform nach Figur 1 etwa mittig in dem Gehäuseteil 20 angeordnet ist. Die mit der Regeleinheit versehene Platine 23 ist nach Figur 2 und 4 in dem Gehäuseteil 220 an der der Position des Getriebes 22 gegenüberliegenden Seite angeordnet, wobei dort an dem Gehäuseteil 220 außenseitig auch wiederum der Elektrostecker 224 vorgesehen ist. Etwa mittig in dem Gehäuseteil 220 befindet sich entsprechend Figur 2 und 4 der Antriebsmotor 21 zum Antrieb bzw. Verstellen der Welle 31 des Ventilstellungselements der Massenstromregel- und Ventileinheit 3.

Über die Dome 270, 271 wird eine Verbindung des Abschlussdeckels 207 mit dem Gehäuseteil 220 der Aktuatoreinheit 200 vorgenommen, wobei dieser hierfür randseitig mit entsprechenden Aufnahmeöffnungen 221, 222, 223, 225 versehen ist. Da dieser bekannte Aufbau nach Figur 2 und 4 recht aufwendig und ferner der seitliche Versatz des Gehäuseteils 220 der Aktuatoreinheit 200 und des Gehäuseteils 30 der Massenstromregel- und Ventileinheit 3 zu einem wenig kompakten Aufbau führt, erweist sich die Ausgestaltung nach Figur 1 mit der etwa mittigen Anordnung des Getriebes 22 und somit der mit der Welle 31 der Massenstromregel- und Ventileinheit 3 zu verbindenden Komponente der Aktuatoreinheit 2 als demgegenüber sehr vorteilhaft. Ferner ist aufgrund des Zwischenfügens des Abschlussdeckels 207 und der sich ergebenden Beabstandung der Aktuatoreinheit 200 und der Massenstromregel- oder Ventileinheit 3 keine Anordnung der Signalerfassungseinrichtung 5 bzw. von deren Temperatursensor 50 an der Aktuatoreinheit 200 mit sensorischer Verbindung zu dem Innern der Massenstromregel- oder Ventileinheit 3 möglich.

Die Signalerfassungseinrichtung 5 bzw. deren Temperatursensor 50 kann an der jeweiligen Anordnungsstelle insbesondere in einer Aufnahme, wie einer taschenartigen Ausnehmung oder Ausformung, des gemeinsamen Anschlussdeckelteils angeordnet werden. Das Material der Aufnahme ist vorteilhaft wärmeleitfähig, so dass ein optimaler Wärmeübergang durch dieses Material hindurch zu dem Temperatursensor möglich ist. Das wärmeleitfähige Material der Aufnahme kann insbesondere wärmeleitfähig und elektrisch isolierend sein. Ist dieses Material Teil des Gehäusedeckelteils der Massenstromregel- oder Ventileinheit 3 oder des gemeinsamen Anschlussdeckelteils 4 wird es vorteilhaft stoffschlüssig mit dem übrigen Material des jeweiligen Gehäuseteils bzw. des gemeinsamen Anschlussdeckelteils 4 verbunden, so dass eine formschlüssige und absolut dichte Aufnahme des Temperatursensors in der Aufnahme ermöglicht wird. Hierbei sind somit aufgrund der stoffschlüssigen Verbindung des wärmeleitfähigen Materials der Aufnahme mit dem übrigen Material keine weiteren Dichtelemente zum Abdichten erforderlich.

Figur 5 zeigt eine Prinzipskizze eines Fahrzeugs 100, das ein Elektrofahrzeug oder Hybridfahrzeug sein kann, bei dem die Baugruppeneinheit 1 nach Figur 1 als 3/2-Wegeventil geeignet angeordnet ist oder werden kann. Das Fahrzeug umfasst einen Energiespeicher 102, der in Form einer Traktionsbatterie ausgebildet sein kann. Ein solcher Energiespeicher wird in einem engen Temperaturbereich von insbesondere 15 bis 25 C° betrieben. Um dies sicherzustellen, wird der Energiespeicher entsprechend temperiert. Dies erfolgt durch einen Kühlmittelkreislauf 103. Dieser umfasst, wie in Figur 5 zu sehen ist, eine Kühleinrichtung 130, einen Chiller 131 und eine Heizeinrichtung 132. Der Chiller 131 ist insbesondere ein Wärmetauscher einer Kälteanlage, die Heizeinrichtung 132 kann beispielsweise ein Widerstands-Zuheizer (PTC-Zuheizer) sein. Der Chiller 131 und die Heizeinrichtung 132 sind parallel zueinander geschaltet, wobei zum Zu- und Abschalten des Chillers und der Heizeinrichtung zwei Ventile, die hier als 3/2-Ventile ausgebildet sind, vorgesehen sind, nämlich die Baugruppeneinheit 1 ist und das andere Ventil, das das Bezugszeichen 134 trägt. Die Baugruppeneinheit 1 kann hier basierend auf der ermittelten Temperatur des dort hindurchströmenden Kühlmittels ein geeignetes Mischen der Teilmassenströme an Kühlmittel vornehmen, um die gewünschte Temperatur des aus der Baugruppeneinheit 1 austretenden Kühlmittels einzustellen. Die Massenstromregel- oder Ventileinheit 3 der Baugruppeneinheit 1 kann hier als Schaltventil oder als Proportionalventil ausgebildet sein.

Der Kühlmittelkreislauf 103 umfasst ferner eine Pumpeinrichtung 135 zum Fördern des durch die Leitungen des Kühlmittelkreislaufs 103 strömenden Kühlmittels, einen Volumenausgleichsbehälter 136, um für einen Volumenausgleich sorgen zu können bei Volumenschwankungen aufgrund eines Kühl- oder Heizbetriebs, eine Rekuperationseinrichtung 137, die in Form eines Rekuperationswärmetauschers ausgebildet und in Reihe hinter der Heizeinrichtung 132 angeordnet ist. Da die Rekuperationseinrichtung 137 eine thermische Masse aufweist, die bei einem erforderlichen Kühlen des Energiespeichers 102 hinderlich wirken kann, wenn sie mitgekühlt werden müsste, da ihr Kühlen mit einem unnötig hohen Energiebedarf verbunden wäre, ist es möglich, die Rekuperationseinrichtung 137 zu überbrücken. Hierzu ist eine Bypassleitung 138 vorgesehen. Der die Rekuperationseinrichtung 137 umfassende Leitungszweig 139 und die Bypassleitung 138 sind über Anschlussstellen 140, 141 (ein Ventil) in den Kühlmittelkreislauf 103 eingebunden. Alternativ zum Vorsehen einer Bypassleitung 138 bei Reihenschaltung der Rekuperationseinrichtung 137 mit der Heizeinrichtung 132 kann die Rekuperationseinrichtung 137 parallel zu der Heizeinrichtung 132 geschaltet werden. Hierbei entfällt das Erfordernis der Bypassleitung 138, da über ein dann vorgesehenes Ventil die Rekuperationseinrichtung 137 zu- oder abgeschaltet werden kann.

Die zum Kühlen und zum Heizen vorgesehenen Einrichtungen des Kühlmittelkreislaufs 103 sind ansonsten parallel zueinander geschaltet, um diese wahlweise zu- und abschalten zu können, je nach dem, ob ein Kühl- oder Heizbetrieb zum Temperieren des Energiespeichers 102 vorgesehen sein soll.

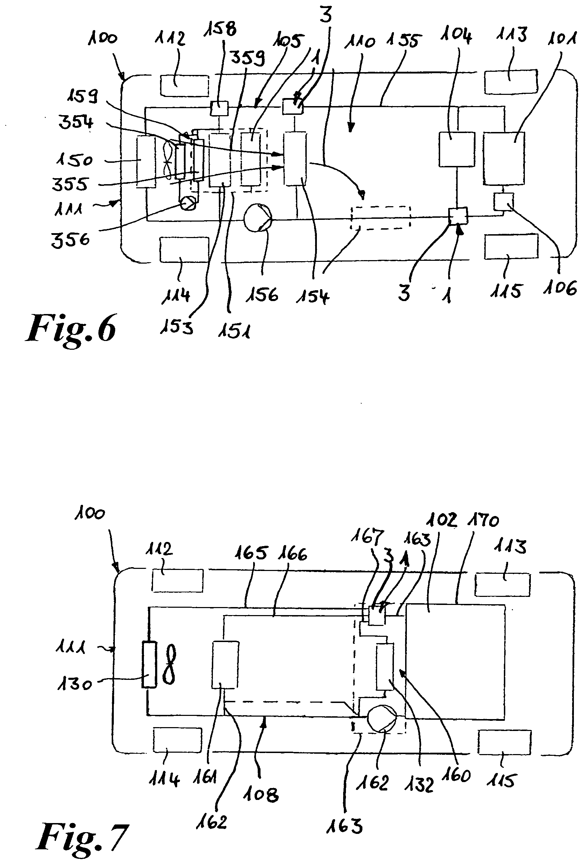

Die Figuren 6 und 7 zeigen weitere Anwendungen der Baugruppeneinheit 1, deren Massenstromregel- oder Ventileinheit 3 in Figur 5 als 3/2-Wegeventil und in Figur 7 als 4/3-Wegeventil ausgebildet ist. Das 4/3-Wegeventil kann als Schaltventil oder Proportionalventil ausgebildet sein. In Figur 6 sind drei 3/2-Wegeventile 158 und die beiden Baugruppeneinheiten 1 mit den Massenstromregel- und Ventileinheiten 3 vorgesehen, also jeweils Ventile für drei Wege und zwei Stellungen, um die einzelnen Pfade der zueinander parallel geschalteten Komponenten eines ersten Kühlmittelkreislaufs 105 schalten und einige davon auch absperren zu können.

Das in Figur 6 gezeigte Fahrzeug 100 umfasst einen Elektromotor 101 oder eine elektrische Maschine, ein Ladegerät 104 und eine Einheit 106 enthaltend einen AC/DC-Wandler und Leistungselektronik. Der AC/DC-Wandler und die Leitungselektronik sind in der Nähe des Elektromotors 101, der dem Antrieb des Fahrzeugs 100 dient, angeordnet. Für den Betrieb im Stillstand, in dem der Elektromotor 101 nicht läuft, ist das Ladegerät 104 parallel zu Elektromotor 101 und der Einheit 106 mit AC/DC-Wandler und Leistungselektronik geschaltet. Zum Konditionieren dieser elektronischen Komponenten ist der erste Kühlmittelkreislauf 105 vorgesehen, über den auch ein Fahrzeuginnenraum 110 beheizt werden kann. Von dem Fahrzeug 100 sind neben dem Fahrzeuginnenraum 110 und einer Fahrzeugfront 111 auch die vier Räder 112, 113, 114, 115 in Figur 5 und 6 angedeutet.

Der erste Kühlmittelkreislauf 105 umfasst einen Kühler 150 für die Elektronikkomponenten, der z.B. luftgekühlt und im Bereich der Fahrzeugfront 111 angeordnet ist, ein Klimagerät 151 mit einem ersten Verdampfer 152 und einem Heizungswärmetauscher 153, der dem Beheizen des Fahrzeugsinnenraums 110, also der Fahrgastzelle, dient. Das Klimagerät 151 kann alternativ Wärme und Kälte über seine Wärmetauscher zur Verfügung stellen.

Zum Fördern des in den Leitungen 155 des ersten Kühlmittelkreislaufs 105 strömenden Kühlmittels, ist eine Pumpeinrichtung 156 in Reihe mit den genannten Komponenten geschaltet. Optional kann die Heizeinrichtung 154 anstatt parallel auch in Reihe mit den übrigen Komponenten geschaltet werden. Dies ist in Figur 6 durch die gestrichelte Linie sowie den Pfeil 157 angedeutet. Eine weitere Möglichkeit besteht darin, einen separaten Heizkreislauf 159, umfassend eine Heizeinrichtung 354, einen Wärmeaustauscher 355 sowie eine Pumpeinrichtung 356 vorzusehen. Ein Luftstrom, wie durch die Pfeile 359 angedeutet, kann zum Transport der durch die Heizeinrichtung 354 oder 154 zur Verfügung gestellten Wärme an dieser vorbeigeleitet werden, um den erwärmten Luftstrom 359 zum Beheizen insbesondere der Fahrgastzelle zu nutzen. Die optionale Heizeinrichtung 154 und der optionale Heizkreislauf 159 können auch im Winterbetrieb zum Zuheizen verwendet werden, wenn die von den Elektrokomponenten abgegebene Wärme nicht ausreicht, um die Fahrgastzelle zu beheizen.

Das Kühlen des Elektroantriebs in Form des Elektromotors 101 und der erforderlichen elektronischen Komponenten der Leistungselektronik, des AC/DC-Wandlers und des Ladegeräts 104 über den ersten Kühlmittelkreislauf 105 erfolgt üblicherweise ausschließlich über den Kühler 150.

Die im Bereich des Elektromotors 101, des Ladegeräts 104 und der Einheit 106 angeordnete, als 3/2-Wegeventil ausgebildete Massenstromregel- oder Ventileinheit 3 der Baugruppeneinheit 1 kann bei entsprechender Einstellung der Massenströme ein gleichzeitiges Kühlen verschiedener der genannten elektronischen Komponenten bewirken. Die Anordnung der elektronischen Komponenten kann dabei sehr unterschiedlich sein, wie hier gezeigt, nämlich parallel zueinander, in Reihe oder aber parallel und in Reihe.

Die andere im ersten Kühlmittelkreislauf 105 angeordnete, als 3/2-Wegeventil ausgebildete Massenstromregel- oder Ventileinheit 3 der dort angeordneten Baugruppeneinheit 1 kann Abwärme der elektronischen Komponenten über verschiedene Wärmetauscher verteilen, wobei dieses 3/2-Wegeventil als elektrisches Schaltventil, jedoch ebenso als Proportionalventil ausgebildet sein kann.

Figur 7 zeigt einen zweiten Kühlmittelkreislauf 108 des Fahrzeugs 100, zum Temperieren des Energiespeichers 102 in Form einer Traktionsbatterie des Fahrzeugs, die insbesondere eine Lithiumionen-Batterie sein kann. Der zweite Kühlmittelkreislauf 108 umfasst zu diesem Zweck die Heizeinrichtung 132, die an der Fahrzeugfront 111 angeordnete Kühleinrichtung 130 sowie einen zweiten Verdampfer 161. Ferner ist eine Pumpeinrichtung 162 vorgesehen, die eine elektrisch betriebene Pumpe sein kann. Von der Traktionsbatterie 102 ist ein diese außenseitig ummantelndes Batteriegehäuse 170 gezeigt, das isoliert oder unisoliert sein kann.

Die Heizeinrichtung 132 sowie die Pumpeinrichtung 162 können zusammen in einem Batteriegehäuse 163 angeordnet werden. Heizeinrichtung 132 und Pumpeinrichtung 162 sind in Reihe geschaltet, wobei beide so nah wie möglich an der Traktionsbatterie 102 angeordnet sind, z.B. Pumpeinrichtung 162 und/oder Gehäuse 163, umfassend die Pumpeinrichtung 162 und die Heizeinrichtung 132, leitungsfrei an die Traktionsbatterie 102 bzw. deren Batteriegehäuse 170 angeflanscht, um ein besonders ortsnahes Anordnen der Heizeinrichtung 160 und der das erwärmte Medium zum Beheizen der Traktionsbatterie 102 fördernden Pumpeinrichtung 163 an der Traktionsbatterie 102 zu möglichen. Die Heizeinrichtung 132 kann ein Widerstandsheizer bzw. PTC-Heizer, ein brennstoffbetriebener Heizer, beispielsweise mit Ethanol betriebener Heizer, oder auch ein Wärmeübertrager einer Wärmepumpe sein.

Die Heizeinrichtung 132 des Heizkreislaufs 160 ist über die als das 4/3-Wegeventil ausgebildete Massenstromregel- oder Ventileinheit 3 der Baugruppeneinheit 1, also ein Ventil für vier Wege und drei Stellungen, mit dem Verdampfer 161 und der Kühleinrichtung 130 über Leitungen 165, 166 und 167 verbunden. Über das 4/3-Wegeventile können die einzelnen Komponenten des zweiten Kühlmittelkreislaufs 108 zu- oder abgeschaltet werden, um die Traktionsbatterie 102 geeignet temperieren zu können. Der zweite Kühlmittelkreislauf bzw. Batterietemperierkreislauf 108 arbeitet sehr schnell und mit ausgesprochen geringen Verlusten, da auch die thermischen Massen der Heizeinrichtung 132 und der Pumpeinrichtung 162 vorteilhaft möglichst gering gehalten werden.

Es sind somit verschiedenste Anordnungsmöglichkeit der Baugruppeneinheit aus Aktuatoreinheit 2 und Massenstromregel- oder Ventileinheit 3 in Temperierkreisläufen insbesondere zum Temperieren von elektronischen Komponenten eines Fahrzeugs reinem Elektro- oder Hybridantrieb möglich. In jeder der Anwendungen kann über die Signalerfassungseinrichtung 5 der Baugruppeneinheit 1 eine Einstellung der Massenstromregel- oder Ventileinheit 3 zum Regeln der durch diese hindurchströmenden Massenströme erfolgen.

Neben den im Vorstehenden beschriebenen und in den Figuren gezeigten Ausführungsvarianten von Aktuatorenheiten und Baugruppeneinheiten mit zumindest einer solchen und zumindest einer Massenstromregel- oder Ventileinheit können noch zahlreiche weitere vorgesehen werden, insbesondere auch beliebige Kombinationen der vorstehend genannten Merkmale von diesen, bei denen zumindest eine Signalerfassungseinrichtung in einem Verbindungsbereich von Aktuatoreinheit und Massenstromregel- oder Ventileinheit angeordnet ist zum Erfassen der Temperatur zumindest eines die Massenstromregel- oder Ventileinheit durchströmenden oder durchströmbaren Massenstroms bzw. zumindest eine Signalerfassungseinrichtung zum Erfassen der Temperatur an der zumindest einen Seite eines Gehäuseteils der Aktuatoreinheit, an der diese mit zumindest einer von ihr anzutreibenden Massenstromregel- oder Ventileinheit verbindbar oder verbunden ist, vorgesehen ist.

### Bezugszeichenliste

- 1: Baugruppeneinheit
- 2: Aktuatoreinheit
- 3: Massenstromregel- und Ventileinheit
- 4: gemeinsamer Anschlussdeckelteil
- 5: Signalerfassungseinrichtung
- 6: übergeordnete Regeleinheit
- 20: Gehäuseteil
- 21: Antriebsmotor/Elektromotor
- 22: Getriebe
- 23: Platine
- 24: Elektrostecker
- 25: Nabe
- 30: Gehäuseteil
- 31: Welle eines Ventilstellungselements
- 32: Anschlusseinrichtung
- 33: Anschlusseinrichtung
- 34: Anschlusseinrichtung
- 35: Inneres von 30
- 36: Gehäusedeckelteil
- 37: innere Kammer
- 38: Ventilstellelement
- 50: Temperatursensor
- 60: Regeleinheit auf 23
- 100: Fahrzeug
- 101: Elektromotor
- 102: Energiespeicher/Traktionsbatterie
- 103: Kühlmittelkreislauf
- 104: Ladegerät
- 105: erster Kühlmittelkreislauf
- 106: Einheit
- 108: zweiter Kühlmittelkreislauf/ Batterietemperierkreislauf
- 110: Fahrzeuginnenraum
- 111: Fahrzeugfront
- 112: Rad
- 113: Rad
- 114: Rad
- 115: Rad
- 130: Kühleinrichtung
- 131: Chiller
- 132: Heizeinrichtung
- 134: Ventil
- 135: Pumpeinrichtung
- 136: Volumenausgleichsbehälter
- 137: Rekuperationseinrichtung
- 138: Bypassleitung
- 139: Leitungszweig
- 140: Anschlussstelle
- 141: Anschlussstelle/Ventil
- 150: Kühler
- 151: Klimagerät
- 152: erster Verdampfer
- 153: Heizungswärmetauscher
- 154: Heizeinrichtung
- 155: Leitung
- 156: Pumpeinrichtung
- 157: Pfeil
- 159: Heizkreislauf
- 161: zweiter Verdampfer
- 162: Pumpeinrichtung
- 163: Batteriegehäuse
- 165: Leitung
- 166: Leitung
- 167: Leitung
- 170: Batteriegehäuse
- 200: Aktuatoreinheit
- 207: Abschlussdeckel
- 220: Gehäuseteil
- 221: Aufnahmeöffnung
- 222: Aufnahmeöffnung
- 223: Aufnahmeöffnung
- 224: Elektrostecker
- 225: Aufnahmeöffnung
- 226: Gehäusedeckelteil
- 270: Dom
- 271: Dom
- 354: Heizeinrichtung
- 355: Wärmeaustauscher
- 356: Pumpeinrichtung
- 359: Pfeile/erwärmter Luftstrom
- 380: Rotorelement
- 381: feststehendes Blendenelement
- 382: Durchgangsöffnung
- 383: Durchgangsöffnung
- 384: Spline
- 385: Rotorteller

## Patentansprüche

1. Aktuatoreinheit (2) mit zumindest einer Signalerfassungseinrichtung (5), wobei die Aktuatoreinheit (2) zumindest einen einen Aktuator (21,22) aufnehmenden Gehäuseteil (20) umfasst, wobei der Aktuator zumindest einen Antriebsmotor (21) und zumindest ein Getriebe (22) umfasst und im Innern des Gehäuseteils (20) angeordnet ist und die Aktuatoreinheit (2) an zumindest einer Seite ihres Gehäuseteils (20) mit zumindest einer von der Aktuatoreinheit (2) anzutreibenden Einheit (3), insbesondere einer Massenstromregel- oder Ventileinheit, verbindbar ist
**dadurch gekennzeichnet, dass**
die zumindest eine Signalerfassungseinrichtung (5) zum Erfassen der Temperatur an der zumindest einen Seite des Gehäuseteils (20), an der die Aktuatoreinheit (2) mit der zumindest einen anzutreibenden Einheit (3) verbindbar ist, vorgesehen ist, wobei ein gemeinsamer
Anschlussdeckelteil (4) von Aktuatoreinheit (2) und der durch diese anzutreibenden Einheit (3) vorgesehen und die zumindest eine Signalerfassungseinrichtung (5) in dem gemeinsamen Anschlussdeckelteil (4) von Aktuatoreinheit (2) und der durch diese anzutreibenden Einheit (3) angeordnet ist.

2. Aktuatoreinheit (2) nach Anspruch 1,
**dadurch gekennzeichnet, dass**
die zumindest eine Signalerfassungseinrichtung (5) beabstandet zu dem zumindest einen Antriebsmotor (21) angeordnet ist.

3. Aktuatoreinheit (2) nach einem der vorstehenden Ansprüche,
**dadurch gekennzeichnet, dass**
zumindest eine Regeleinheit (6,60) zum Regeln insbesondere des Antriebsmotors (21) vorgesehen ist, insbesondere die Regeleinheit (6) an oder in dem Gehäuseteil (20) der Aktuatoreinheit (2) angeordnet ist.

4. Aktuatoreinheit (2) nach einem der vorstehenden Ansprüche,
**dadurch gekennzeichnet, dass**
die zumindest eine Signalerfassungseinrichtung (5) auf einer Platine (23) der Aktuatoreinheit (2), insbesondere einer eine Regeleinheit (60) umfassenden Platine (23), angeordnet oder mit dieser signalverbunden ist.

5. Baugruppeneinheit (1) mit zumindest einer Aktuatoreinheit (2) nach einem der vorstehenden Ansprüche und zumindest einer Massenstromregel- oder Ventileinheit (3),
**dadurch gekennzeichnet, dass**
zumindest eine Signalerfassungseinrichtung (5) in einem Verbindungsbereich von Aktuatoreinheit (2) und Massenstromregel- oder Ventileinheit (3) angeordnet ist zum Erfassen der Temperatur zumindest eines die Massenstromregel- oder Ventileinheit (3) durchströmenden oder durchströmbaren Massenstroms.

6. Baugruppeneinheit (1) nach Anspruch 5,
**dadurch gekennzeichnet, dass**
der Massenstrom ein Haupt- oder Gesamtmassenstrom (ṁ₃) mit einer Temperatur (t₃) oder ein Teilmassenstrom (ṁ₁, ṁ₂) mit einer Temperatur (t₁, t₂) ist.

7. Baugruppeneinheit (1) nach Anspruch 5,
**dadurch gekennzeichnet, dass**
in dem Verbindungsbereich ein gemeinsamer Anschlussdeckelteil (4) von Aktuatoreinheit (2) und Massenstromregel- oder Ventileinheit (3) vorgesehen ist, wobei die Signalerfassungseinrichtung (5) im Bereich des Anschlussdeckelteils (4), insbesondere in dem Anschlussdeckelteil (4), angeordnet ist oder durch den Anschlussdeckelteil (4) hindurchgreift.

8. Baugruppeneinheit (1) nach Anspruch 5,
**dadurch gekennzeichnet, dass**
der Verbindungsbereich mehrere Gehäusedeckelteile von Aktuatoreinheit (2) und Massenstromregel- oder Ventileinheit (3) umfasst, in denen die Signalerfassungseinrichtung (5) angeordnet ist oder durch die die Signalerfassungseinrichtung (5) hindurchgreift.

9. Baugruppeneinheit (1) nach einem der Ansprüche 5 bis 8,
**dadurch gekennzeichnet, dass**
die Massenstromregel- oder Ventileinheit (3) eine Proportionalventileinheit oder eine Schaltventileinheit ist.

10. Baugruppeneinheit (1) nach Anspruch 9,
**dadurch gekennzeichnet, dass**
die Massenstromregel- oder Ventileinheit (3) eine 3/2-Wegeventileinheit oder eine 4/3-Wegeventileinheit ist.

## Claims

1. Actuator unit (2) having at least one signal detection device (5), wherein the actuator unit (2) comprises at least one housing part (20) which accommodates an actuator (21, 22), wherein the actuator comprises at least one drive motor (21) and at least one transmission (22) and is arranged in the interior of the housing part (20) and the actuator unit (2) is connectable on at least one side of its housing part (20) to at least one unit (3) which is to be driven by the actuator unit (2), in particular a mass flow control or valve unit,
**characterised in that**
the at least one signal detection device (5) is provided for detecting the temperature on the at least one side of the housing part (20) on which the actuator unit (2) is connectable to the at least one unit (3) which is to be driven, wherein a connection cover part (4) common to the actuator unit (2) and the unit (3) which is to be driven thereby is provided and the at least one signal detection device (5) is arranged in the connection cover part (4) common to the actuator unit (2) and the unit (3) which is to be driven thereby.

2. Actuator unit (2) according to claim 1,
**characterised in that**
the at least one signal detection device (5) is arranged spaced apart from the at least one drive motor (21).

3. Actuator unit (2) according to any one of the preceding claims,
**characterised in that**
at least one control unit (6, 60) for controlling in particular the drive motor (21) is provided, in particular the control unit (6) is arranged on or in the housing part (20) of the actuator unit (2).

4. Actuator unit (2) according to any one of the preceding claims,
**characterised in that**
the at least one signal detection device (5) is arranged on a printed circuit board (23) of the actuator unit (2), in particular a printed circuit board (23) comprising a control unit (60), or is connected thereto in terms of signalling.

5. Assembly unit (1) having at least one actuator unit (2) according to any one of the preceding claims and at least one mass flow control or valve unit (3), **characterised in that**
at least one signal detection device (5) is arranged in a connection region of the actuator unit (2) and the mass flow control or valve unit (3) in order to detect the temperature at least of a mass flow which is flowing or is able to flow through the mass flow control or valve unit (3).

6. Assembly unit (1) according to claim 5,
**characterised in that**
the mass flow is a main or total mass flow (ṁ₃)with a temperature (t₃) or a partial mass flow (ṁ₁, ṁ₂) with a temperature (t₁, t₂).

7. Assembly unit (1) according to claim 5,
**characterised in that**
a connection cover part (4) common to the actuator unit (2) and the mass flow control or valve unit (3) is provided in the connection region, wherein the signal detection device (5) is arranged in the region of the connection cover part (4), in particular in the connection cover part (4), or extends through the connection cover part (4).

8. Assembly unit (1) according to claim 5,
**characterised in that**
the connection region comprises a plurality of housing cover parts of the actuator unit (2) and the mass flow control or valve unit (3) in which the signal detection device (5) is arranged or through which the signal detection device (5) extends.

9. Assembly unit (1) according to any one of claims 5 to 8,
**characterised in that**
the mass flow control or valve unit (3) is a proportional valve unit or a shift valve unit.

10. Assembly unit (1) according to claim 9,
**characterised in that**
the mass flow control or valve unit (3) is a 3/2-way valve unit or a 4/3-way valve unit.

## Revendications

1. Unité d'actionnement (2) avec au moins un dispositif de détection de signaux (5), l'unité d'actionnement (2) comprenant au moins une partie de boîtier (20) recevant au moins un actionneur (21, 22), l'actionneur comprenant au moins un moteur d'entraînement (21) et au moins un engrenage (22) disposé à l'intérieur du boîtier (20), l'unité d'actionnement (2) connectable sur au moins un côté de sa partie de boîtier (20) à au moins une unité (3) en particulier une unité derégulation de débit massique ou de vanne, pour être entraînée par l'unité d'actionnement (2),
**caractérisée en ce que**
l'au moins un dispositif de détection de signal (5) pour détecter la température est placé sur au moins un côté de la partie de boîtier (20) sur lequel l'unité d'actionnement (2) est connectable à l'au moins une unité entraînée (3), une partie de couvercle de raccordement commune (4) de l'unité d'actionnement (2) et de l'unité (3) étant prévue, l'au moins un dispositif de détection de signaux (5) étant disposé dans la partie de couvercle de raccordement commune (4) de l'unité d'actionnement (2) et de l'unité (3) devant être entraînée par celle-ci.

2. Unité d'actionnement (2) selon la revendication 1,
**caractérisée en ce que**
l'au moins un dispositif de détection de signaux (5) est disposé à distance de l'au moins un moteur d'entraînement (21).

3. Unité d'actionnement (2) selon l'une des revendications précédentes,
**caractérisée en ce que**
au moins une unité de commande (6, 60) est prévue pour commander, en particulier, le moteur d'entraînement (21), en particulier l'unité de commande (6) est disposée sur ou dans la partie de boîtier (20) de l'unité d'actionnement (2).

4. Unité d'actionnement (2) selon l'une des revendications précédentes,
**caractérisée en ce que**
l'au moins un dispositif de détection de signaux (5) est disposé sur une carte de circuits imprimés (23) de l'unité d'actionnement (2), en particulier une carte de circuits imprimés (23) comprenant une unité de commande (60), ou est relié par signaux à celle-ci.

5. Ensemble (1) comprenant au moins une unité d'actionnement (2) selon l'une des revendications précédentes et au moins une unité de régulation de débit massique ou de vanne (3),
**caractérisé en ce que**
au moins un dispositif de détection de signal (5) est disposé dans la zone de raccordement entre l'unité d'actionneur (2) et l'unité de régulation de débit massique ou de vanne (3), pour détecter la température d'au moins un débit massique qui traverse ou peut s'écouler à travers l'unité de régulation de débit massique ou de vanne (3).

6. Ensemble (1) selon la revendication 5,
**caractérisé en ce que**
le débit massique est un débit massique principal ou total (rh3) avec une température (t3) ou un débit massique partiel (rh1, rh2) avec une température (t1, t2).

7. Ensemble (1) selon la revendication 5,
**caractérisé en ce que**
dans la zone de raccordement un couvercle de raccordement commun (4) pour l'unité d'actionnement (2) et le régulateur de débit massique ou l'unité de vanne (3)est prévu, le dispositif de détection de signal (5) étant disposé dans la zone de la partie de couvercle de raccordement (4), en particulier dans la partie de couvercle de raccordement (4), ou s'étendant à travers la partie de couvercle de raccordement (4).

8. Ensemble (1) selon la revendication 5,
**caractérisé en ce que**
la zone de raccordement comprend plusieurs parties de couvercle de boîtier de l'unité d'actionnement (2) et de l'unité de régulation de débit massique ou de vanne (3) dans lesquelles le dispositif de détection de signal (5) est disposé ou à travers lesquelles le dispositif de détection de signal (5) passe.

9. Ensemble (1) selon l'une des revendications 5 à 8,
**caractérisé en ce que**
l'unité de régulation de débit massique ou de vanne (3) est une unité de vanne proportionnelle ou une unité de vanne de commutation.

10. Ensemble (1) selon la revendication 9,
**caractérisé en ce que**
le régulateur de débit massique ou l'unité de vanne (3) est une unité de vanne 3/2 voies ou une unité de vanne 4/3 voies.
